Europäisches Patentamt

European Patent Office

Office européen des brevets

(11) Veröffentlichungsnummer: **0 260 684**
B1

# EUROPÄISCHE PATENTSCHRIFT

(45) Veröffentlichungstag der Patentschrift:
28.02.90

(51) Int. Cl.⁴: **F16L 31/00, B60C 5/04**

(21) Anmeldenummer: 87113589.3

(22) Anmeldetag: 17.09.87

(54) **Schlauch mit lösbarer Endlosverbindung.**

(30) Priorität: 19.09.86 DE 3631875
04.09.87 DE 3729670

(43) Veröffentlichungstag der Anmeldung:
23.03.88 Patentblatt 88/12

(45) Bekanntmachung des Hinweises auf die Patenterteilung:
28.02.90 Patentblatt 90/9

(84) Benannte Vertragsstaaten:
DE FR GB IT NL

(56) Entgegenhaltungen:
AT-B- 31 915
GB-A- 1 494 578

(73) Patentinhaber: **Continental AG, Königsworther Platz 1 Postfach 1 69, D-3000 Hannover 1(DE)**

(72) Erfinder: **Mahling, Rolf, Leipziger Strasse 18, D-3540 Korbach(DE)**
Erfinder: **Frey, Othmar, Mecklenburger Strasse 4, D-3540 Korbach(DE)**

ACTORUM AG

## Beschreibung

Die Erfindung bezieht sich auf einen, unbewehrte Wandungen aus Gummi oder dergleichen aufweisenden, mit einem Ventil ausgestatteten Schlauch von Luftbereifungen, insbesondere für einspurige Fahrzeuge, mit einer Endlosverbindung nach der Art, daß ein Schlauchende durch Einkrempeln gedoppelt ist und die beiden offenen Schlauchenden ähnlich einer Muffenverbindung ineinander geschoben sind, sowie auf ein Verfahren und auf Vorrichtungen bzw. deren Verwendung zur Herstellung des Schlauches. Ein solcher geteilter Luftschlauch ist nach dem österreichischen Patent Nr. 31 915 bekannt. Die dort beschriebene Lösung bedarf jedoch je eines Widerlagerringes an jedem der beiden Schlauchenden und eines Überdeckungsschlauches, der die Stoßstelle der Schlauchenden abdichtet. Die beiden Schlauchenden sind formschlüssig gegeneinander unverrückbar festgelegt und werden erst durch ein zusätzliches, die Stoßstelle überbrückendes Schlauchstück abgedichtet. Dieses System ist dermaßen aufwendig, daß der Vorteil aller geteilten Luftschläuche, daß nämlich der Schlauch - etwa zu Reparaturen - ohne Achsdemontage entfernt werden kann, nicht zu dessen Durchsetzung ausreichte. Aufgabe der Erfindung ist es, einen geteilten Luftschlauch mit einer wesentlich einfacher aufgebauten Endlosverbindung zu schaffen.

Ausgehend von einem gattungsgemäßen Schlauch wird die Aufgabe dadurch gelöst, daß allein durch unterschiedliche luftdruckabhängige Ausdehnung eines Schlauchendes gegenüber dem anderen die Endlosverbindung dichtet, wozu der endliche Schlauch an seinem eingekrempelten Ende einen lichten Innendurchmesser $d_1'$ gleich oder wenig kleiner aufweist als der Außendurchmesser $D_2$ am einzusteckenden Ende, und wozu der Schlauch mindestens in dem an das eingekrempelte Ende anschließenden Bereich solchermaßen erweitert ist, daß das dareingekrempelte Ende faltenfrei ist. Vorzugsweise ist der Innendurchmeser $d_1'$ des eingekrempelten Endes um bis zu 0,4 mm kleiner als der Außendurchmesser $D_2$ des einzusteckenden Endes. Durch diesen kleinen Maßunterschied ist die Dichtigkeit der beschriebenen Endlosverbindung schon beim Überdruck 0 gewährleistet. Die Maßdifferenz ist bei üblichen Schlauchmaterialien und Schlauchwandstärken klein genug, damit das geringfügig gestauchte, eingesteckte Ende nicht beult und Falten wirft und auf diese Weise die Dichtigkeit aufheben würde.

Das entscheidende Funktionsprinzip der vorgeschlagenen Endlosverbindung für einen Schlauch besteht darin, daß das nach innen gekrempelte Schlauchende durch den außen angreifenden inneren Luftüberdruck nach innen, also auf einen kleineren Durchmesser gedrückt wird, während das eingesteckte Schlauchende durch den dort innen angreifenden Luftdruck auf einen größeren Durchmesser nach außen gedrückt wird. Dadurch entsteht in der Dichtfläche eine über den Luftüberdruck steigende Pressung. Das gutmütige Dichtigkeitsverhalten der Endlosverbindungen erfindungsgemäßer Schläuche beruht darauf, daß die Pressung in der Dichtfläche um so höher ist, je höher der abzudichtende Überdruck ist. Diese Dichtung ist dadurch in regeltechnischem Sinne stabil. Infolgedessen reicht es aus, wenn im verbundenen Zustand das eingekrempelte Ende und das eingesteckte Ende sich auf einer Länge größer als einem Drittel des Schlauchdurchmessers des eingesteckten Endes überlappen.

Damit das eingekrempelte Ende wie eine gegen den abzudichtenden Überdruck angestellte Dichtlippe wirken kann, weist vorzugsweise der erweiterte Bereich einen Innendurchmesser auf, der gegenüber dem Außendurchmesser des eingekrempelten Endes größer oder gleich ist. Bei der Festlegung der Maßtoleranzen, die aus wirtschaftlichen Gründen groß sein sollten, insbesondere bei der Festlegung des unteren Toleranzabmaßes für den Innendurchmesser des erweiterten Bereiches, kann ausgenutzt werden, daß der Innendurchmesser des erweiterten Bereiches sogar geringfügig kleiner sein darf als der Außendurchmesser des eingekrempelten Endes, daß also sogar eine kleine Pressung zwischen dem eingekrempelten und dem erweiterten bereich zulässig ist, insoweit neben der Faltenfreiheit gewährleistet ist, daß die Pressung zwischen dem eingekrempelten Ende und dem eingesteckten Ende größer ist, als die Pressung zwischen dem eingekrempelten Ende und dem erweiterten Bereich.

Die Schlauchenden sind in Umfangsrichtung nicht formschlüssig gegeneinander festgelegt. Von daher werden in die Endlosverbindung also auch keine Spannungen in Umfangsrichtung eingeleitet. Grundsätzlich kann die Länge $l_1'$ des eingekrempelten Endes verschieden von der Länge $l_2'$ des eingesteckten Endes sein, sofern nur eine Mindestüberlappungslänge eingehalten wird.

Nach einer bevorzugten Ausführungsform des erfindungsgemäßen Schlauches ist sein einzusteckendes Ende über einer so großen Umfangslänge im Außendurchmesser $D_2$ konstant, daß auch nach dem Abschneiden der für kleinere Raddurchmesser überschüssigen Umfangslänge eine dichte Endlosverbindung durch Einstecken des gekürzten Endes in das eingekrempelte Ende erreicht wird. Dann brauchen nämlich nicht mehr für verschiedene Raddurchmesser verschiedene Schläuche angeboten zu werden; vielmehr kann der Endverbraucher selbst einen für den größten Raddurchmesser ausreichend langen Schlauch für kleinere Raddurchmesser passend zuschneiden. Nach einer Weiterbildung der Erfindung wird dem Endverbraucher diese Anpassung dadurch erleichtert, daß am einzusteckenden Ende des Schlauches Markierungen angebracht sind, die angeben, für welchen Raddurchmesser gegebenenfalls wieviel vom einzusteckenden Ende abzuschneiden ist.

Wie bei jeder lösbaren Dichtung so kann auch hier die Dichtwirkung durch in die Dichtfläche eingedrungenen Festkörperstaub beeinträchtigt werden. Diese Gefahr wird vermindert, indem das einzukrempelnde Schlauchende mit Querrillen ausgestattet ist. Die Querrillen sind durch Vorsprünge voneinander getrennt. Das wesentliche dieser bevorzugten Ausführungsart ist, daß an den Vorsprüngen eine besonders hohe Pressung zur Erhöhung der Dichtwirkung erzielt wird. Eventuell eingedrungener Staub wird infolge der höheren Pressung dichter vom Gummi umschlossen.

Der Effekt der zuvor beschriebenen Weiterbildung der Erfindung kann dadurch gesteigert werden, daß in den Querrillen eine von Gummi kaum, vorzugsweise gar nicht, absorbierbare, zähe Flüssigkeit angeordnet ist. Die Rillen wirken dann als Vorratsvolumen für die Dichtflüssigkeit. Selbst eine durch Staub verunreinigte Endlosdichtung an erfindungsgemäßen Schläuchen wird durch diese Weiterbildung der Erfindung in ihrem Volumenstrom dermaßen verringert, daß ein merklicher Druckabfall erst nach Wochen eintritt.

Erfindungsgemäße Schläuche mit der neuartigen Endlosverbindung können sowohl auf einem Dorn als auch in einer Form geheizt werden. Ein Dorn als Vorrichtung zur Vulkanisation erfindungsgemäßer Schläuche weist über seiner Länge mindestens drei Bereiche mit verschiedenen Durchmessern auf. Vorzugsweise zeigt er zwischen den im Durchmesser verschiedenen Bereichen je einen kleinen Übergangsbereich, in denen sich der Dorndurchmesser stetig differenzierbar ändert.

Eine besondere Schwierigkeit der Dornheizug ist, daß der dickste Dornbereich, der den Schlauchbereich abformt, in den das einzukrempelnde Ende eingekrempelt wird, sich nicht an einem Ende des Dorns befindet. Infolgedessen muß zumindest ein kleines Schlauchstück beim Aufziehen auf den Dorn zunächst auf einen größeren Durchmesser geweitet werden, als es schließlich am fertigen Schlauch aufweisen soll. Zur Lösung wird zweckmäßigerweise so verfahren, daß das überdehnte Schlauchende axial gespannt wird und durch Festklemmen unter axialer Spannung gehalten wird, so daß der Kautschuk bei der Vulkanisation an dem Dornbereich zur Abformung des einzukrempelnden Endes anliegt. Dazu weist der Dorn zweckmäßigerweise anschließend an den Bereich, der das einzukrempelnde Ende des Schlauches abformt, einen Befestigungsbereich auf. Das Entfernen des Schlauches wird dadurch erleichtert, daß nach der Vulkanisation der an das einzukrempelnde Ende anschließende festgeklemmte Schlauchbereich abgetrennt wird.

Formen zur Herstellung von Schläuchen werden bislang durch Hobeln oder Schaben hergestellt, wobei das Werkzeug sich gegenüber dem Werkstück um eine senkrechte Achse, die Raddrehachse vorwegnehmend, bewegt. Die so hergestellten Vulkanisierformen sind im wesentlichen kreisrund. Mit diesem Herstellungsverfahren können keine Formen erzeugt werden, die zur Vulkanisation erfindungsgemäßer Schläuche geeignet wären. Nach einer Weiterbildung der Erfindung wird dieses Problem dadurch gelöst, daß die Form in vier Bereiche geteilt ist, wobei zwei sich gegenüberstehende Bereiche im wesentlichen halbkreisförmig ausgebildet sind und die beiden anderen sich gegenüberstehenden Bereiche im wesentlichen gerade sind, so daß alle vier Bereiche zusammen ein Oval beschreiben, daß weiterhin in einem der geraden und in beiden halbkreisförmigen Bereichen der Querdurchmesser gleich einem Maß D ist, daß in diesem der geraden Bereiche eine Öffnung zur Anvulkanisation des Ventilstutzens angeordnet ist, und daß der andere gerade Bereich in drei Teilbereiche mit jeweils verschiedenen Durchmessern gegliedert ist. Die beiden halbkreisförmigen Formbereiche werden zweckmäßigerweise zunächst zusammenhängend als ein Kreisring gefertigt und erst dann aufgetrennt. Auf diese Weise können für die beiden halbkreisförmigen Formhälften die bislang bekannten Formherstellungsverfahren beibehalten werden. Zur Herstellung der beiden geraden Formbereiche wird hingegen eine spanende Schneidkante um eine in Umfangsrichtung verlaufende Drehachse geführt; die beiden geraden Formbereiche können gebohrt oder innen gedreht werden.

Nach diesem Vorschlag bestehen also beide zusammengehörenden Formhälften aus jeweils vier Bereichen. Diese werden miteinander verbunden. Vorzugsweise wird zwischen den je vier Formbereichen eine lösbare Verbindungsart gewählt. Nach einem durch längere Benutzungsdauer eingetretenen Verschleiß können die Formbereiche dann nämlich wieder voneinander getrennt und nachgearbeitet werden.

Obwohl es der Erfindung letztlich darum geht, endliche Schläuche wegen ihrer leichteren Montierbarkeit marktfähig zu machen, empfiehlt es sich, in Formen, endlose Schläuche herzustellen. Zweckmäßigerweise ist zwischen dem Formbereich zur Abformung des einzukrempelnden Schlauchendes und dem Formbereich zur Abformung des einzusteckenden Schlauchendes eine Einschnürung angeordnet, die angibt, wo der Schlauch aufzutrennen ist.

Die Erfindung wird nachfolgend anhand einiger Figuren erläutert.

Es zeigt:

Fig. 1 in durchgezogener Linie einen erfindungsgemäßen Schlauch, wie er nach Abzug von einem Heizdorn vorliegt, und in gestrichelter Linie das eingekrempelte Schlauchende,

Fig. 2 die Endlosverbindung eines erfindungsgemäßen Schlauches,

Fig. 3 eine Variante eines erfindungsgemäßen Schlauches,

Fig. 4 einen Dorn zur Herstellung erfindungsgemäßer Schläuche und

Fig. 5 eine Form zur Herstellung erfindungsgemäßer Schläuche.

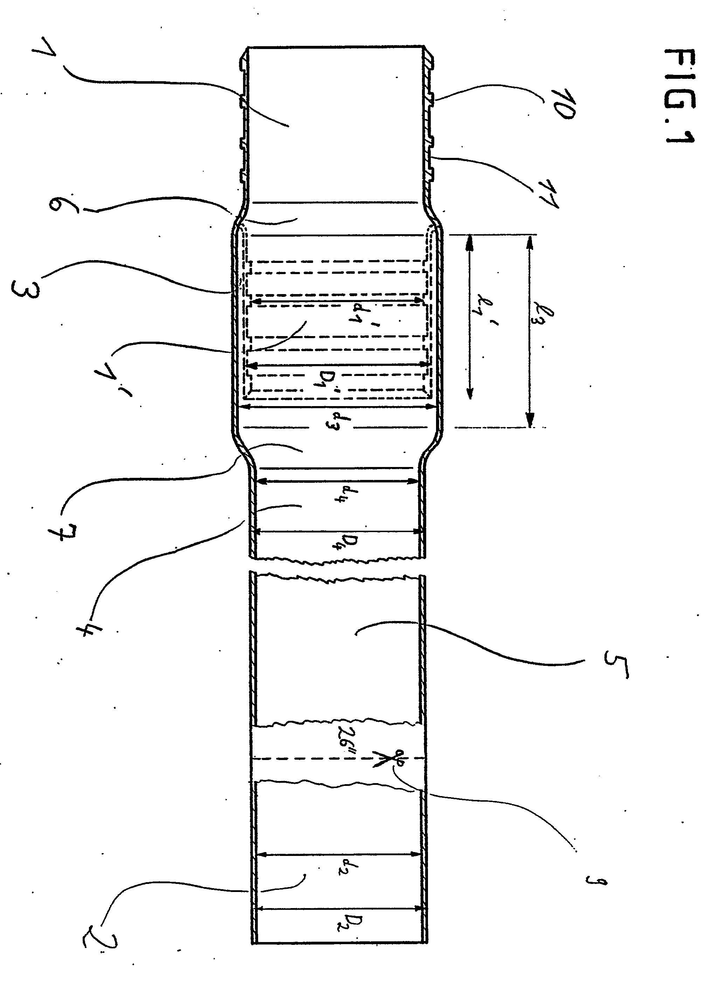

Figur 1 zeigt im Schnitt die beiden Enden 1, 2 eines erfindungsgemäßen Steckschlauches 5 vor dem endlosen Zusammenfügen. Um die Endlosverbindung herzustellen, ist das Schlauchende 1, wie gestrichelt dargestellt, nach innen zu krempeln, dann das Schlauchende 2 um 360°, den Radumfang beschreibend, herumzuwinden und schließlich in das eingekrempelte Ende 1' einzustecken.

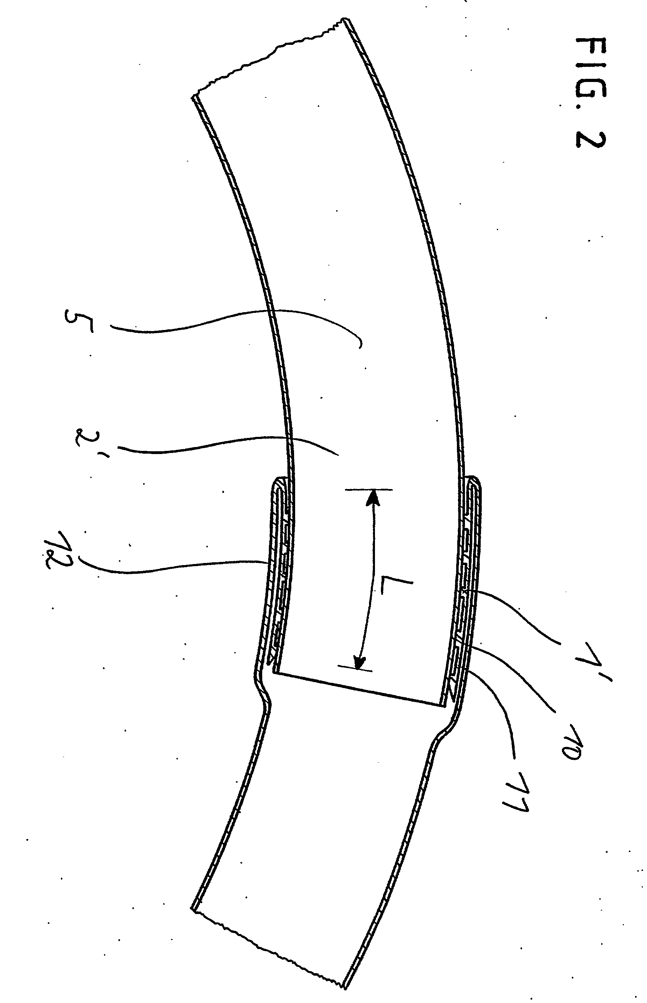

Analog der Bezeichnungsweise 1 für das einzukrempelnde Ende und 1' für das eingekrempelte Ende wird im folgenden das andere Ende im nichtmontierten Zustand als einzusteckendes Ende 2 und im montierten Zustand (siehe Figur 2) als eingestecktes Ende 2' bezeichnet.

Die leichte Krempelbarkeit des Endes 1 ist durch den erweiterten Schlauchbereich 3, der unter Zwischenschaltung eines kleinen Übergangsbereiches 6 an das einzukrempelnde Ende 1 anschließt, ermöglicht. Damit das eingekrempelte Ende 1' sich dem nachfolgend eingesteckten Ende 2' (siehe Figur 2) frei anschmiegt, ist der erweiterte Schlauchbereich 3 so bemessen, daß die Wandung des eingekrempelten Endes 1' die Wandung des erweiterten Bereiches 3 zumindest im drucklosen Zustand nicht berührt. Dementsprechend ist der Innendurchmesser $d_3$ des erweiterten Bereiches 3 größer als der Außendurchmesser $D_1'$ des eingekrempelten Endes und die Länge $l_3$ des erweiterten Bereiches 3 ist größer als die Länge $l_1'$ des eingekrempelten Bereiches 1'.

Das eingekrempelte Ende 1' weist einen kleinsten Innendurchmesser $d_1'$ auf, der geringfügig kleiner ist als der Außendurchmesser $D_2$ des einzusteckenden Endes. Für die gängigsten Schlauchtypen (1,75" - Bereifung) hat sich am besten bewährt, $d_1'$ zwischen 0,1 und 0,4 mm kleiner zu wählen als $D_2$. Wenn $d_1'$ noch kleiner gewählt würde, würde es schwierig, das Ende 2 faltenfrei einzustecken; wenn $d_1'$ größer gewählt würde, würde sich die Dichtwirkung bei kleinen Überdrücken verringern, wenn $d_1'$ sogar größer als $D_2$ wäre, dann könnte die Dichtwirkugng nur noch durch einen Druckstoß zu Beginn des Aufpumpens herbeigeführt werden.

Das einzukrempelnde Ende 1 weist Vorsprünge 10 auf, zwischen denen sich Rillen 11 ergeben. Im endlos gefügten Zustand stellt sich an den Vorsprüngen 10 eine erhöhte Pressung ein, die Verunreinigungen der Dichtfläche wegzudrücken vermag. Zur weiteren Erhöhung der Schmutzunempfindlichkeit wird vortielhafterweise vor dem Zusammenfügen der Endlosverbindung eine von Gummi kaum - vorzugsweise gar nicht - absorbierbare, zähe Flüssigkeit in die Rillen 11 eingestrichen zur Verbesserung der Langzeitdichtwirkung. Beste Ergebnisse werden mit Schmierseifen als Dichtflüssigkeit erzielt. In den Rillen 11 wird die Dichtflüssigkeit sehr lange gespeichert.

Die Dichtflüssigkeit und die Rillen 11 sowie die Vorsprünge 10 sind nicht erforderlich, jedoch zweckmäßig, um die Endlosverbindung auch bei Verschmutzung mit Festkörperstaub langfristig dichten zu können. Auch mit diversen Hautpflegemitteln auf wässeriger oder alkoholischer Basis als Dichtflüssigkeit, wie sie praktisch überall verfügbar sind, wird die Dichtigkeit über mehrere Monate gewährleistet.

Zwischen dem einzusteckenden Schlauchende 2 und dem erweiterten Bereich 3 befindet sich allgemein der längste Schlauchbereich 4. In diesem Bereich 4 haben die Schlauchdurchmesser $d_4$ und $D_4$ praktisch keinen Einfluß auf die Dichtwirkung der Endlosverbindung; sie können also in weiten Grenzen beliebig gewählt werden. Speziell in diesem Ausführungsbeispiel ist $d_4$ gleich $d_2$ und $D_4$ gleich $D_2$ gewählt, so daß die Bereiche 4 und 2 nahtlos ineinander übergehen. Infolgedessen ist zwischen den Bereichen 2 und 4 kein Übergangsbereich erforderlich, wie es einen 7 zwischen den Bereichen 3 und 4 und einen anderen 6 zwischen den Bereichen 1 und 3 gibt.

Ein großer Vorteil der gleichartigen Ausführung der Bereiche 2 und 4 liegt darin, daß für alle Raddurchmesser - egal ob 16 Zoll oder 28 Zoll - nur noch ein Schlauch angeboten zu werden braucht, nämlich ein solcher, der für den größten Raddurchmesser ausreichend lang ist. Für die kleineren Raddurchmesser wird einfach das Ende 2 abgeschnitten. Zweckmäßigerweise sind an dem Schlauch wie dargestellt, Markierungen 9 angebracht, die angeben, für welche Radgröße wieviel abzuschneiden ist.

Die Figur 2 zeigt die Endlosverbindung 12 eines erfindungsgemäßen Schlauches 5. Weil zur Fügung einfach das Schlauchende 2' in das eingekrempelte Ende 1' eingesteckt ist, werden erfindungsgemäße, endliche Schläuche 5 in diesem Text auch als Steckschläuche 5 bezeichnet. Die beiden in lösbarer Weise endlos gefügten Enden 1', 2' überlappen sich auf einer Länge L, die etwa dem Schlauchdurchmesser entspricht.

Es ist deutlich erkennbar, daß trotz der Vorsprünge 10 und Rillen 11 des eingekrempelten Endes 1' das eingesteckte Ende 2' nicht formschlüssig festgelegt ist. Auf diese Weise ist erreicht, daß in dem Steckschlauch 5 nach dessen Montage und einigen Radumdrehungen keine Spannungen in Umfangsrichtung wirken, was die Pannenanfälligkeit verringert.

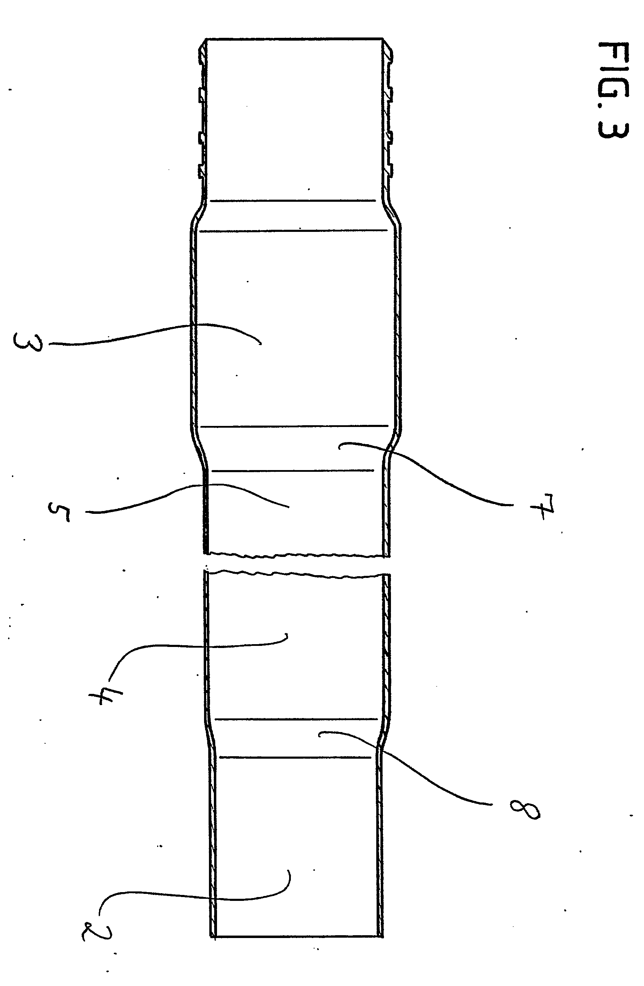

Die Figur 3 zeigt analog der Figur 1 einen nicht montierten Steckschlauch 5. Hier ist jedoch der Bereich 4, der die größte Länge einnimmt, vom Schlauchende 2 verschieden. Zwischen dem Schlauchende 2 und dem Bereich 4 ist der Übergangsbereich 8 angeordnet, der ähnlich dem Übergangsbereich 7 zwischen den Schlauchbereichen 3 und 4 einen stetigen Übergang der verschiedenen Schlauchbereiche ermöglicht. Unter Verzicht auf die, durch $D_4$ gleich $D_2$ ermöglichte, vielseitige Einsetzbarkeit der in den Figuren 1 und 2 dargestellten Steckschläuche, ergibt sich mit dieser Anordnung der Vorteil, daß die Übergangsbereiche 7, 8 hier jeweils kleinere Durchmesserdifferenzen überbrücken müssen als der eine Übergangsbereich 7 in den Figuren 1 und 2.

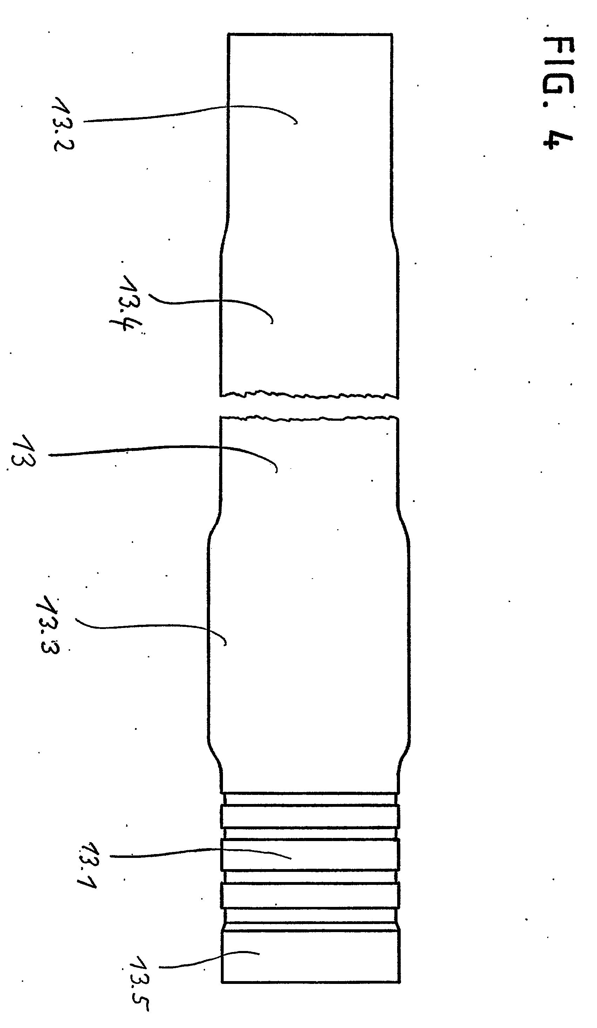

Die Figur 4 zeigt einen Dorn 13, der als Vorrichtung zur Herstellung erfindungsgemäßer Schläuche dient. Er gliedert sich in mehrere Bereiche und zwar den Bereich 13.1 zur Abformung des einzukrempelnden Schlauchendes, den Bereich 13.2 zur Abformung des einzusteckenden Schlauchendes, den Bereich 13.3 zur Abformung des erweiterten Schlauchbereiches, den unterbrochen dargestellten Bereich 13.4, der den größten Teil der Gesamtlänge einnimmt, nicht näher bezeichnete Übergangsbereiche und einen an den Bereich 13.1 anschließenden Fortsatz 13.5. Nachfolgend wird das mit diesem Dorn 13 ermöglichte Herstellungsverfahren erläutert.

Auf den Dorn 13 wird ein extrudierter hohler Kautschukstrang aufgezogen, zwecks Vulkanisation geheizt und schließlich wieder abgezogen. Zur weitgehenden Vermeidung von Rutschbewegungen des Kautschukstranges auf dem Dorn wird durch den Dorn Luft eingeblasen, so daß der grüne Schlauch gegenüber dem Dorn ein Axialluftgleitlager bildet. Zweckmäßigerweise wird der grüne Schlauch von dem Dornende 13.2 aus über den Dorn gezogen. Dann braucht nämlich nur ein kurzer Teil des Schlauches über den erweiterten Bereich 13.3.des Dornes 13 gezogen zu werden. Der Schlauch wird bis über den Bereich 13.1 des Dornes hinaus aufgezogen, axial gespannt und mittels einer schellenähnlichen Vorrichtung in diesem Spannungszustand fixiert. Dazu verfügt der Dorn über den Klemmfortsatz 13.5. Durch die axiale Verspannung schrumpft der Schlauch in der Querrichtung, so daß das einzukrempelnde Schlauchende - trotz vorheriger Dehnung zur Überwindung des Dornbereiches 13.3 - satt am Dornbereich 13.1 zur Abformung und Vulkanisation anliegt.

Nach der Vulkanisation des Schlauches wird der nur für die axiale Verspannung vorgesehene, kurze Spannbereich an der Kante abgetrennt, der verbleibende Schlauch beginnend an der Schnittkante, die infolge der Fase leicht zu hintergreifen ist, nach außen umgekrempelt und zum Ende 13.2 hin abgezogen. Der Schlauch liegt dann in dem Zustand vor, wie in Figur 3 dargestellt, und sein Ende 1 kann nach innen gekrempelt werden, um die zuvor beschriebene Endlosverbindung 12 zu ermöglichen.

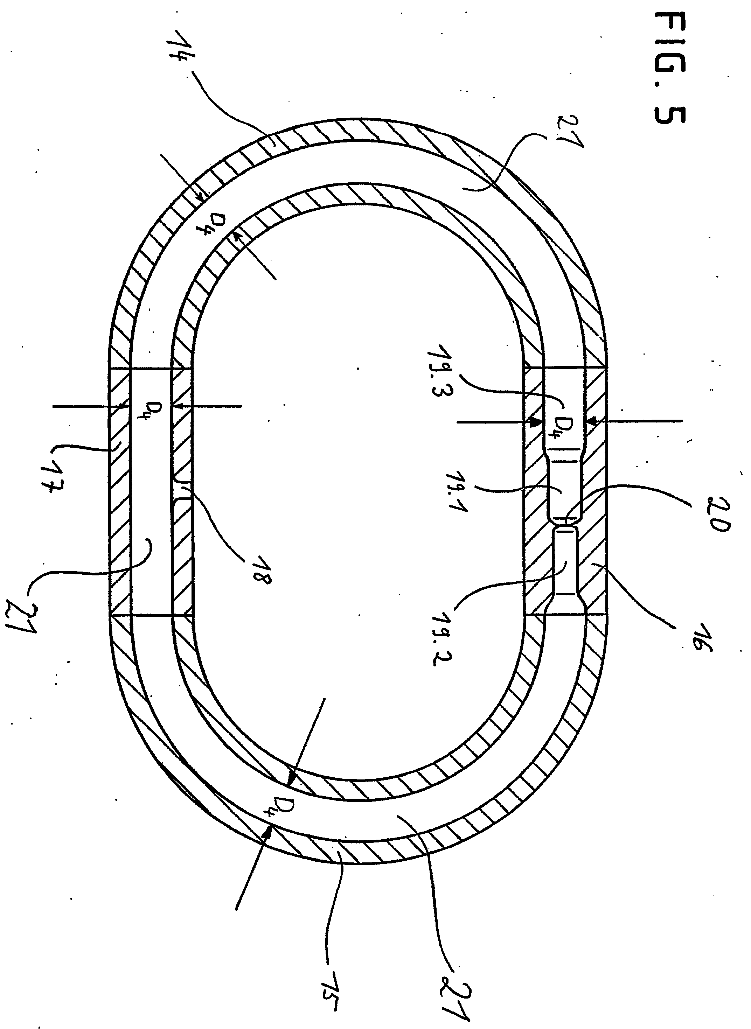

Als Alternative zur Fertigung auf einem Dorn, wie zuvor beschrieben, können erfindungsgemäße Steckschläuche auch in Formen hergestellt werden. Dieses Fertigungsverfahren erleichtert eine weitgehende Automatisierung des Schlauchherstellungsprozesses, weil das Umkrempeln des gesamten Schlauches beim Abziehen vom Dorn entfällt. Allerdings wäre an Formen der bislang bekannten kreisrunden Art die Realisierung verschiedener Schlauchquerdurchmesser außerordentlich schwierig. Als Weiterbildung der Erfindung wird in der Figur 5 ein Formenaufbau gezeigt, der diese Probleme überwindet.

Die in der Figur 5 dargestellte Form besteht im wesentlichen aus zwei halbkreisförmigen Formteilen 14 und 15 sowie zwei geraden Formteilen 16 und 17. Das gerade Formstück 17 formt in der Öffnung 18 den Ventilstutzen. Das andere gerade Formstück 16 formt die Kupplungsteile des Schlauches, um die Endlosverbindung herzustellen. Die für die Endlosverbindung wesentlichen Formbereiche 19.1 zur Abformung des einzukrempelnden Endes, 19.2 zur Abformung des einzusteckenden Endes und 19.3 als erweiterter Bereich zur Aufnahme des einzukrempelnden Endes sind alle nicht in der Umfangsrichtung gekrümmt, sondern gerade. Dadurch kann dieser komplizierte Teil der Form durch einfaches Bohren hergestellt werden.

Zwischen den Bereichen 19.1 und 19.2 ist eine scharfkantige Einschnürung 20 vorgesehen, um die Stelle zu markieren, an der der zunächst endlos gefertigte Schlauch aufzutrennen ist, um ihn ohne Raddemontage aufziehen zu können und schließlich wieder endlos verbinden zu können.

Die gesamte Schlauchform ist mittig geteilt, also in der Zeichenebene, um das Halbzeug einlegen und den fertigen Schlauch entnehmen zu können. In der Zeichnung ist nur die untere Formhälfte dargestellt; ihre Trennflächen, auf denen die analog aufgebaute obere Formhälfte aufgesetzt wird, sind zur Unterscheidung von den Flächen, die an der Schlauchformgebung mitwirken, schraffiert. Zweckmäßigerweise werden die geraden Formteile 16 und 17 zunächst vollständig geformt und dann die obere und untere Hälfte geteilt, während sich für die gekrümmten Formteile 14, 15 zunächst die Teilung und dann das Aushobeln der im Querschnitt halbkreisförmigen Rinnen 21 empfiehlt. Sowohl die obere als auch die untere Formhälfte bestehen also aus vier zusammengefügten Einzelteilen, wobei die Verbindungselemente nicht gesondert dargestellt sind. Durch Längenvariation der geraden Formteile 16, 17 kann ohne Änderung der gekrümmten Formteile 14, 15 die Umfangslänge des zu fertigenden Schlauches an verschiedene Radgrößen angepaßt werden.

In der Beschreibung der Figur 1 wurde bereits erwähnt, daß - je nach Gewichtung unterschiedlicher Gesichtspunkte - die Durchmesser des die größte Länge einnehmenden Schlauchbereiches 4 innerhalb weiter Grenzen ausgewählt werden kann, ohne auf die Dichtigkeit der Endlosverbindung Einfluß zu nehmen. Mit einer Form nach Figur 5 werden solche Schläuche erzeugt, die im Schlauchbereich 4 den gleichen Außendurchmesser $D_4$ wie im Schlauchbereich 3 aufweisen ($D_4 = D_3$). Selbstverständlich ist mit prinzipiell gleichem Formenaufbau, jedoch etwas unterschiedlicher Bemessung auch jede andere Auslegung möglich, z. B. $D_4 = D_2$. Die in diesem Beispiel dargestellte Konstellation hat den Vorteil, daß die Schlauchwandung im aufgepumpten Zustande besonders wenig gedehnt wird und infolgedessen von besonders geringer Pannenanfälligkeit ist.

## Patentansprüche

1. Unbewehrte Wandungen aus Gummi oder dergleichen aufweisender, mit einem Ventil ausgestatteter Schlauch von Luftbereifungen, insbesondere für einspurige Fahrzeuge, mit einer Endlosverbindung nach der Art, daß ein Schlauchende durch Einkrempeln gedoppelt ist, und beide offenen Schlauchenden ähnlich einer Muffenverbindung ineinander geschoben sind, dadurch gekennzeichnet, daß allein durch unterschiedliche luftdruckabhängige Ausdehnung eines Schlauchendes (1) gegenüber dem anderen (2) die Endlosverbindung dichtet, wozu der endliche Schlauch (5) an seinem eingekrempelten Ende (1') einen lichten Innendurchmesser $d_i'$ gleich oder wenig kleiner aufweist als der Außendurchmesser $D_2$ am einzusteckenden Ende (2), und wozu der Schlauch (5) mindestens in dem an das eingekrempelte Ende (1') anschließenden Bereich (3) solchermaßen erweitert ist, daß das dareingekrempelte Ende (1') faltenfrei ist.

2. Schlauch nach Anspruch 1, dadurch gekennzeichnet, daß der Innendurchmesser $d_i'$ des eingekrempelten Endes (1') um bis zu 0,4 mm kleiner als der Außendurchmesser $D_2$ des einzusteckenden Endes (2) ist.

3. Schlauch nach Anspruch 1, dadurch gekennzeichnet, daß er in dem erweiterten Bereich (3) einen Innendurchmesser $d_3$ aufweist, der gegenüber dem Außendurchmesser $D_i'$ des eingekrempelten Endes (1') größer oder gleich oder höchstens so geringfügig kleiner ist, daß die Pressung zwischen dem eingekrempelten Ende (1') und dem eingesteckten Ende (2') größer ist, als die Pressung zwischen dem eingekrempelten Ende (1') und dem erweiterten Bereich (3).

4. Schlauch nach Anspruch 1, dadurch gekennzeichnet, daß im verbundenen Zustand das eingekrempelte Ende (1') und das eingesteckte Ende (2') sich auf einer Länge L ≧ 1/3 $D_2$ überlappen.

5. Schlauch nach Anspruch 1, dadurch gekennzeichnet, daß die Länge $1_1'$ des eingekrempelten Endes (1') verschieden ist von der Länge des eingesteckten Endes (2').

6. Schlauch nach Anspruch 1, dadurch gekennzeichnet, daß das einzukrempelnde Ende (1) mit Querrillen (11) ausgestattet ist.

7. Schlauch nach Anspruch 6, dadurch gekennzeichnet, daß in den Querrillen (11) eine von Gummi kaum absorbierbare, oder nicht absorbierbare, zähe Flüssigkeit angeordnet ist.

8. Schlauch nach Anspruch 1, dadurch gekennzeichnet, daß sein einzusteckendes Ende (2) über einer so großen Umfangslänge im Außendurchmesser konstant ist, daß auch nach dem Abschneiden der für kleinere Raddurchmesser überschüssigen Umfangslänge, durch Einstecken des Endes (2) in das eingekrempelte Ende (1') sich eine dichte Endlosverbindung ergibt.

9. Schlauch nach Anspruch 8, dadurch gekennzeichnet, daß an seinem einzusteckenden Ende (2) Markierungen (9) angebracht sind, die angeben, für welchen Raddurchmesser gegebenenfalls wieviel vom einzusteckenden Ende abzuschneiden ist.

10. Rundstab mit über seiner Länge mindestens drei Bereichen (13.1, 13.2, 13.3) mit verschiedenen Durchmessern, dadurch gekennzeichnet, daß der Rundstab als dornartige Vorrichtung (13) zur Vulkanisation von Schläuchen nach Anspruch 1 angewendet wird.

11. Rundstab als dornartige Vorrichtung nach Anspruch 10, dadurch gekennzeichnet, daß zwischen den im Durchmesser verschiedenen Bereichen je ein kleiner Übergangsbereich vorgesehen ist, in denen sich der Dorndurchmesser stetig differenzierbar ändert.

12. Rundstab als dornartige Vorrichtung nach Anspruch 10 oder 11, dadurch gekennzeichnet, daß er anschließend an den Bereich (13.1), der das einzukrempelnde Ende des Schlauches abformt, einen Befestigungsbereich (13.5) aufweist.

13. Verfahren zur Herstellung eines Schlauches nach Anspruch 1, wobei ein hohler Kautschukstrang unter Schmierung mit einem Gas reibungsarm auf einen Dorn aufgezogen wird, der Schmierfilm entfernt und dann der Schlauch vulkanisiert und abgezogen wird, dadurch gekennzeichnet, daß nach Entfernung des Schmierfilmes zumindest das Schlauchende, das für die Endlosverbindung einzukrempeln ist, axial gespannt wird und durch Festklemmen - vorzugsweise auf einem am Dorn angeordneten Befestigungsbereich - unter axialer Spannung gehalten wird, so daß der Kautschuk bei der Vulkanisation an dem Dornbereich zur Abformung des einzukrempelnden Endes anliegt, obwohl dieser Schlauchbereich beim Aufziehen des Schlauches auf einen größeren Durchmesser gedehnt wurde.

14. Verfahren nach Anspruch 13 dadurch gekennzeichnet, daß nach der Vulkanisation der an das einzukrempelnde Ende anschließende festgeklemmte Schlauchbereich abgetrennt wird.

15. Form als Vorrichtung zur Herstellung von Schläuchen nach Anspruch 1, gekennzeichnet dadurch, daß die Form in vier Bereiche (14, 15, 16, 17) geteilt ist, wobei zwei sich gegenüberstehende Bereiche (14, 15) im wesentlichen halbkreisförmig ausgebildet sind und die beiden anderen sich gegenüberstehenden Bereiche (16, 17) im wesentlichen gerade sind, so daß alle vier Bereiche (14, 15, 16, 17) zusammen ein Oval beschreiben, weiterhin daß in einem geraden (17) und beiden halbkreisförmigen Bereichen (14, 15) der Querdurchmesser gleich einem Maß D ist, daß in diesem geradem Bereich (17) eine Öffnung (18) zur Anvulkanisation des Ventilstutzens angeordnet ist, und daß der andere gerade Bereich (16) in drei Teilbereiche (19.1, 19.2, 19.3) mit jeweils verschiedenen Durchmessern gegliedert ist.

16. Form nach Anspruch 15, dadurch gekennzeichnet, daß zwischen dem Formbereich (19.1) zur Abformung des einzukrempelnden Schlauchendes und den (19.2) zur Abformung des einzusteckenden Schlauchendes eine Einschnürung (20) vorgesehen ist, die angibt, wo der Schlauch aufzutrennen ist.

17. Form nach Anspruch 15 dadurch gekennzeichnet, daß die vier Bereiche (14, 15, 16, 17) beider Formhälften lösbar miteinander verbunden sind.

## Revendications

1. Chambre à air comportant des parois non renforcées en caoutchouc ou analogue, pourvue d'une valve, pour des pneumatiques, notamment pour des véhicules à une voie, cette chambre comportant une liaison continue d'une structure telle qu'une extrémité de la chambre est doublée par retournement vers l'intérieur et que les deux extrémités ouvertes de la chambre sont emboîtées l'une dans l'autre d'une manière analogue à une liaison par emboîtement, caractérisée en ce que la liaison continue est étanchée simplement par une expansion différente, fonction de la pression d'air, d'une extrémité (1) de la chambre à air par rapport à l'autre extrémité (2), la chambre à bouts libres (5) ayant à son extrémité retournée vers l'intérieur (1') un diamètre intérieur $d_1'$ égal ou un peu inférieur au diamètre extérieur $D_2$ de l'extrémité à emboîter (2), et la chambre à air (5) étant élargie, au moins dans la zone (3) suivant l'extrémité retournée vers l'intérieur (1') à un degré tel que l'extrémité retournée vers l'intérieur (1') soit exempte de plis.

2. Chambre à air selon la revendication 1, caractérisée en ce que le diamètre intérieur $d_1'$ de l'extrémité retournée vers l'intérieur (1') est plus petit, d'une valeur pouvant atteindre (0,4 mm), que le diamètre extérieur $D_2$ de l'extrémité à emboiter (2).

3. Chambre à air selon la revendication 1, caractérisée en ce qu'elle comporte, dans la zone élargie (3), un diamètre intérieur $d_3$ qui est plus grand, ou égal, ou tout au moins légèrement plus petit que le

diamètre extérieur $D_1'$ de l'extrémité retournée vers l'intérieur (1') afin la force de serrage entre l'extrémité retournée vers l'intérieur (1') et l'extrémité emboîtée (2') soit supérieure à la force de serrage s'exerçant entre l'extrémité retournée vers l'intérieur (1') et la zone élargie (3).

4. Chambre à air selon la revendication 1, caractérisée en ce que, dans la condition de liaison, l'extrémité retournée vers l'intérieur (1') et l'extrémité emboîtée (2') se chevauchent sur une longueur L ≥ 1/3 $D_2$.

5. Chambre à air selon la revendication 1, caractérisée en ce que la longueur $1_1'$ de l'extrémité retournée vers l'intérieur (1') est différente de la longueur de l'extrémté emboîtée (2').

6. Chambre à air selon la revendication 1, caractérisée en ce que l'extrémité retournée vers l'intérieur (1) est pourvue de rainures transversales (11).

7. Chambre à air selon la revendication 6, caractérisée en ce que dans les rainures transversales (11) est disposé un liquide visqueux, pouvant à peine, ou non être absorbé par du caoutchouc.

8. Chambre à air selon la revendication 1, caractérisée en ce que son extrémité à emboîter (2) a un diamètre extérieur constant sur une longueur circonférentielle suffisamment grande pour que, également après le secionnement de la longueur circonférentielle en excès pour des petits diamètres de roues, on obtienne une liaison continue étanche par emboîtement de l'extrémité (2) dans l'extrémité retournée vers l'intérieur (1').

9. Chambre à air selon la revendication 8, caractérisée en ce qu'elle est pourvue à son extrémité à emboîter (2) de repères (9) qui indiquent pour quels diamètres de roues et le cas échéant de quelles distances on doit sectionner l'extrémité à emboîter.

10. Barreau rond comportant sur sa longueur au moins trois zones (13.1, 13.2, 13.3) ayant des diamètres différents, caractérisé en ce que le barreau rond est utilisé comme un dispositif (13) analogue à un mandrin pour la vulcanisation de chambres à air selon la revendication 1.

11. Barreau rond utilisé comme un dispositif analogue à un mandrin selon la revendication 10, caractérisé en ce qu'il est prévu entre les zones des diamètres différents respectivement une petite zone de transition dans laquelle le diamètre de mandrin change toujours de façon différente.

12. Barreau rond utilisé comme un dispositif analogue à un mandrin selon une des revendications 10 ou 11, caractérisé en ce qu'il comporte, à la suite de la zone (13.1) qui forme l'extrémité de chambre à retourner vers l'intérieur, une zone de fixation (13.5).

13. Procédé de fabrication d'une chambre à air selon la revendication 1, selon lequel un boudin creux de caoutchouc est engagé avec lubrification à l'aide d'un gaz et avec peu de frottement sur un mandrin, le film de lubrifiant est enlevé et ensuite la chambre à air est vulcanisée et retirée, caractérisé en ce que, après enlèvement du film de lubrifiant, au moins l'extrémité de chambre qui doit être retournée pour la liaison continue, est serrée axialement et est maintenue sous une tension axiale par blocage – de préférence sur une zone de fixation disposée sur le mandrin –, de telle sorte que le caoutchouc, lors de la vulcanisation, s'applique contre la zone précitée du mandrin de façon à former l'extrémité à retourner vers l'intérieur, bien que cette zone de chambre ait été expansée à une diamètre supérieur lors de l'engagement de la chambre.

14. Procédé selon la revendication 13, caractérisé en ce que, après la vulcanisation, la zone de chambre fixée à la suite de l'extrémité à retourner vers l'intérieur est sectionnée.

15. Moule utilisable comme dispositif de fabrication de chambres à air selon la revendication 1, caractérisé en ce que le moule est divisé en quatre sections (14, 15, 16, 17), deux sections mutuellement opposées (14, 15) ayant une forme sensiblement demi-circulaire tandis que les deux autrs sections mutuellement opposées (16, 17) sont sensiblement droites, de telles sorte que les quatre sections (14, 15, 16, 17) définissent ensemble une ovale, en outre en ce que, dans une section droite (17) et dans les deux sections demi-circulaires (14, 15), le diamètre transversal est égal à une dimension (D), en ce que dans cette zone droite (17, il est prévu une ouverture (18) pour une fixation par vulcanisation de la tubulure de valve et en ce que l'autre section droite (16) est divisée en trois sections partielles (19.1, 19.2, 19.3) ayant des diamètres respectivement différents.

16. Moule selon la revendication 15, caractérisé en ce qu'il est prévu entre la section de moule (19.1) servant au formage de l'extrémité de chambre à retourner vers l'intérieur et la section (19.2) servant au formage de l'extrémité de chambre à emboîter, un rétrécissement (20) qui indique où la chambre droit être sectionnée.

17. Moule selon la revendication 15, caractérisé en ce que les quatre sections (14, 15, 16, 17) des deux moitiés du moule sont reliées entre elles de façon séparable.

**Claims**

1. Tube for pneumatic tyres, more especially for single-track vehicles, which tube has non-reinforced walls formed from rubber or the like and is provided with a valve, having an endless connection such that one end of the tube is doubled by being bent inwardly, and both open ends of the tube are slipped one inside the other in a similar way to a sleeve connection, characterised in that the endless connection is sealed solely by one end of the tube (1) having an expansion which is dependent upon pneumatic pressure and differse from that of the other end (2), for which purpose the finite tube (5) has, at its inwardly bent end (1'), an inside diamter $d_1'$ which is equal to, or slightly smaller than, the outside diameter $D_2$ at the end (2) to be inserted, and for which purpose the tube (5) is widened, at least in the region (3) which communicates with the inwardly bent end (1'), in such a manner than the end (1'), which is bent inwardly there, is fold-free.

2. Tube according to claim 1, characterised in that the inside diameter $d_1'$ of the inwardly bent end (1') is up to 0.4 mm smalller than the outside diameter $D_2$ of the end (2) to be inserted.

3. Tube according to claim 1, characterised in that it has, in the widened region (3), an inside diameter $d_3$ which is greater than, or is identical to, or at most is slightly smaller than the outside diameter ($D_1'$) of the inwardly bent end (1'), such that the pressure between the inwardly bent end (1') and the inserted end (2') is greater than the pressure between the inwardly bent end (1') and widened region (3).

4. Tube according to claim 1, characterised in that, in the connected state, the inwardly bent end (1') and the inserted end (2') overlap one another over a length $L \geq {}_1/3\ D_2$.

5. Tube according to claim 1, characterised in that the length $1_1'$ of the inwardly bent end (1') differs from the length of the inserted end (2').

6. Tube according to claim 1, characterised in that the end (1) to be bent inwardly is provided with transverse grooves (11).

7. Tube according to claim 6, characterised in that a viscous fluid, which is scarbely absorbable by rubber, or is non-absorbable, is disposed in the transverse grooves (11).

8. Tube according to claim 1, characterised in that its end (2) to be inserted has a constant outside diameter over such a large circumferential length that, even after the circumferential length, which is excessive for smaller wheel diameters, has been cut to size, a tight endless connection is produced by inserting the end (2) into the inwardly bent end (1').

9. Tube according to claim 8, characterised in that, at its end (2) which is to be inserted, markings (9) are provided which indicate how much possibly needs to be cut-off from the end to be inserted for which particular wheel diameter.

10. Round rod having at least three regions (13.1, 13.2, 13.3) of different diameters over its length, characterised in that the round rod is employed as a mandrel-like device (13) for the vulcanisation of tubes in accordance with claim 1.

11. Round rod serving as a mandrel-like device according to claim 10, characterised in that a small transitional region is provided between each of the regions of different diameters, the mandrel diameter constantly changing in a differentiable manner in said regions.

12. Round rod serving as a mandrel-like device according to claim 10 or 11, characterised in that it has a fastening region (13.5) in communication with the region (13.1) which shapes the end of the tube to be bent inwardly.

13. Method of producing a tube according to claim 1, wherein a hollow rubber extruded body is drawn over a mandrel in a low-friction manner by lubrication with a gas, the lubricating film is removed, and then the tube is vulcanised and removed, characterised in that, after removal of the lubricating film, at least the end of the tube which is to be bent inwardly for the endless connection is axially tensioned and is retained by fixed clamping – preferably on a fastening region disposed on the mandrel – utilising axial tension, so that the rubber during vulcanisation abuts against the mandrel region for the shaping of the end to be bent inwardly, although this region of the tube has been expanded to a greater diameter during the fitting of the tube.

14. Method according to claim 13, characterised in that the fixedly clamped region of the tube, which communicates with the end to be bent inwardly, is severed.

15. Mould serving as a device for producing tubes according to claim 1, characterised in that the mould is divided into four regions (14, 15, 16, 17), wherein two opposed regions (14, 15) are substantially semi-circular, and the other two opposed regions (16, 17) are substantially rectilinear, so that all four regions (14, 15, 16, 17) together describe an oval, in that, moreover, the transverse diameter in one rectilinear region (17) and in both semi-circular regions (14, 15) is equal to a dimension D, in that an opening (18) is disposed in this rectilinear region (17) for pre-vulcanising the valve connection pipe, and in that the other rectilinear region (16) is split-up into three partial regions (19.1, 19.2, 19.3), each having different diameters.

16. Mould according to claim 15, characterised in that a construction portion (20) is provided between the mould region (19.1) for shapping the end of the tube to be bent inwardly and the mould region (19.2) for shaping the end of the tube to be inserted, such constricted portion indicating where the tube is to be servered.

17. Mould according to claim 15, characterised in that the four regions (14, 15, 16, 17) of both halves of the mould are detachably interconnected.

FIG.1

FIG. 2

FIG. 3

FIG. 4

13.2

13.4

13

13.3

13.1

13.5

FIG. 5